# EUROPEAN PATENT SPECIFICATION

(11) **EP 1 454 472 B1**
(45) Date of publication and mention of the grant of the patent: **03.05.2006**
(21) Application number: 02790749.2
(22) Date of filing: 12.12.2002
(51) Int. Cl.: H04L 29/06, H04L 12/56, G06F 9/38

(54) **COMMUNICATIONS DEVICE, METHOD AND PROGRAM FOR RECEIVING PROCESS EXECUTION, AND COMPUTER-READABLE RECORDING MEDIUM HAVING SAME PROGRAM RECORDED THEREON**
KOMMUNIKATIONSGERÄT, EMPFANGPROZESSAUSFÜHRUNGS- VERFAHREN UND -PROGRAM, UND RECHNERLESBARES MEDIUM AUF DEM DIESES PROGRAM GESPEICHERT IST
DISPOSITIF DE TELECOMMUNICATION, PROCEDE ET PROGRAMME POUR LA RECEPTION D'EXECUTION DE PROCEDE ET SUPPORT D'ENREGISTREMENT LISIBLE PAR ORDINATEUR SUR LEQUEL LEDIT PROGRAMME EST ENREGISTRE

(30) Priority: 13.12.2001 JP 2001379450
(43) Date of publication of application: 08.09.2004
(73) Proprietor: MATSUSHITA ELECTRIC INDUSTRIAL CO., LTD., Kadoma-shi, Osaka 571-0050 (JP)
(72) Inventor: KASHIWABARA, Kazuyuki, Hiroshima-shi, Hiroshima 730-0013 (JP); TACHIBANA, Wataru, Takatsuki-shi, Osaka 569-0064 (JP); OGAWA, Noriyuki, Ube-shi, Yamaguchi 755-0034 (JP); MORIOKA, Masaaki, Higashihiroshima-shi, Hiroshima 739-0024 (JP)
(74) Representative: Dempster, Benjamin John Naftel
(86) International application number: PCT/JP2002/013045
(87) International publication number: WO 2003/055247

(56) References cited:
- EP-A- 0 447 054

## Description

### TECHNICAL FIELD

The present invention relates to a communications device for fetching, in response to an occurrence of a receive interrupt or a timer interrupt, data which has been received from some other device and stored in a receive buffer, a method and a program for executing a receiving process, and a computer-readable recording medium having the same program recorded thereon.

### BACKGROUND ART

In communications devices, interrupts are used for software to acknowledge hardware communications, for example. The hardware stores, in a receive buffer, data including requests and acknowledgements and the like, and coming from some other device. Upon notification from the hardware that a receive interrupt or a timer interrupt has occurred, the software switches the task in process to an interrupt handler.

A receive interrupt occurs when the hardware performs data reception. The resulting receive interrupt notified by the hardware is detected by a receive interrupt handler. The software fetches the received data stored in the receive buffer into memory. The software then analyzes the received data thus fetched into the memory. If the analysis result shows that the received data is representing a connection request, for example, an acknowledgement is returned back to the source from where the request was forwarded. Such a handshake establishes a communications link with the source from where the request was forwarded.

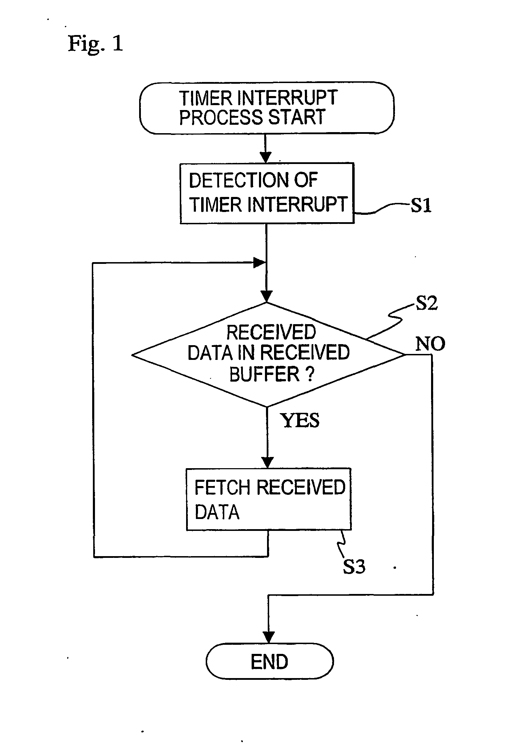

A timer interrupt, on the other hand, occurs at regular intervals. As shown in FIG. 1 example, a timer interrupt handler detects a timer interrupt notified by the hardware (S1). Even if a timer interrupt is detected, a receive buffer does not always carry the received data therein. Thus, the software then determines whether or not the received data has been stored in the receive buffer (S2). If determined that the received data is stored in the receive buffer, the software accordingly fetches the received data in the receive buffer into memory (S3).

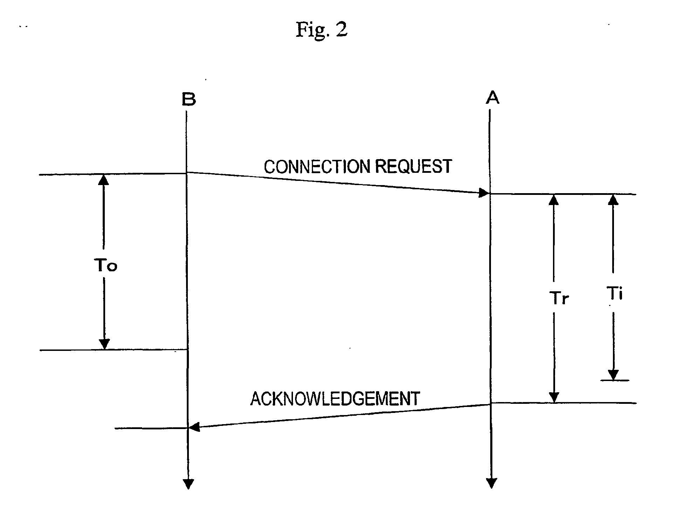

The issue here is that, data fetching by the timer interrupt often slows response compared with the case by the receive interrupt. This is because, in such a case of data fetching responding to the timer interrupt, even if data storage is made in the receive buffer, the data is not fetched unless another timer interrupt occurs. Therefore, if the data storage is made in the receive buffer immediately after a timer interrupt occurs, it means that data fetching has to wait for the interval, approximately, between timer interrupt occurrences. Referring to FIG. 2 example, when a communications device *A* receives a connection request, set in another communications device *B* having forwarded the request is a timeout time *To*, which is a time before an acknowledgement is returned. The longer a time *Ti,* which is between request reception by the communications device *A* and occurrence of another timer interrupt, the longer, correspondingly, a response time *Tr*. As a result, if no acknowledgement is returned within the timeout time *To*, a communications link fails to be established. Even if a communications link is established after trying again, the resulting communications link may require extra time for data transfer.

For betterment, to shorten the response time, such measures are taken as shortening the interval between occurrences of the timer interrupts, or continuously using the receive interrupt.

The problem here is that, shortening the interval between occurrences of the timer interrupts, or continuously using the receive interrupt consequently wakes up the interrupt handler more often. As a result of the interrupt handler being waked up frequently, the dispatching time takes longer for that, resulting in increase of a CPU load. If this is the case, the communications efficiency may be reduced unless using a CPU higher in throughput or additional hardware.

Such a problem becomes critical in communications devices exemplified by mobile phones. The recent type of mobile phones has been enhanced to be faster in data communications speed, but adopting a CPU higher in throughput for the purpose is difficult in terms of cost. Similarly, increasing the size of the hardware is not preferable. Also in terms of power consumption, CPU or hardware implementation on the mobile phones has a restriction.

The present invention is proposed in consideration of such problems of the prior art as described above. An object thereof is to provide a communications device with which a communications efficiency can be improved without depending on CPU or hardware throughput, and a communications link with some other device can be smoothly established. Also provided are a method and a program for receiving process execution, and a computer-readable recording medium having the same program recorded thereon.

WO00/52895 discloses a communications device in accordance with the precharacterising portion of claim 1.

### DISCLOSURE OF THE INVENTION

In order to attain the object above, the present invention adopts the following means.

In the present invention, data provided from some other device and stored in a receive buffer is fetched in response to a receive interrupt or a timer interrupt.

A link state determination unit determines whether or not a communications link with the other device is established. Based on the determination result, if the communications link has been established, a receive interrupt control unit causes the receive interrupt to stop occurring for the duration.

That is, while the communications link is established, the data provided from the other device and stored in the receive buffer is fetched responding to an occurrence of a timer interrupt. There is no requirement for quick response while the communications link is established, and thus there is no need to shorten the interval between occurrences of the timer interrupts. Because no receive interrupt occurs in the meantime, the dispatching time to be taken associated with interrupt occurrences can be shortened. What resulted thereby is better communications efficiency achieved independent of CPU or hardware throughput.

In a first aspect of the invention, in order to cause the receive interrupt to stop occurring while the communications link is established, the link state determination unit also determines whether the communications link has been cut off. If the communications link is determined as having been cut off, the receive interrupt is allowed to occur again.

Without the communications link being established, the receive interrupt is free to occur. Thus, while no communications link is established, an occurrence of a receive interrupt may cause, to fetch, the data provided from the other device and stored in the receive buffer. Although responding only to an occurrence of a timer interrupt may not ensure enough response to establish a communications link, responding to an occurrence of a receive interrupt can ensure this response.

In this manner, without depending on the CPU or hardware throughput, the communications efficiency can be successfully improved, further leading to smooth establishment of a communications link with some other device.

In a further aspect of the invention, if a request comes for establishing another communications link when one communications link has been already established, the link state determination unit may refer to an application instruction to determine whether to accept or reject the request.

If the request is accepted through determination, the receive interrupt control unit allows the receive interrupt to occur again. If the request is rejected through determination, a negative response is made with respect to the request.

As such, even if a request comes for establishing another communications link when one communications link has been already established, the receive interrupt is temporarily allowed to occur again, so that thus requested communications link can be smoothly established.

Dependent claims 3-5 represent embodiments of this further aspect. In particular, the link state determination unit may refer to a setting of QoS (Quality Of Service) to determine whether or not to accept the request for establishing another communications link received while one communications link has been already established. If the QoS setting is indicating a guaranteed type, it predicts possible difficulty of multilink communications. As such, the QoS setting automatically leads to appropriate determination without users' or developers' instructions.

The invention also relates to a receiving process method, a receiving process program and a computer-readable recording medium as defined in claims 6-8.

### BRIEF DESCRIPTION OF THE DRAWINGS

FIG. 1 is a flowchart of a receiving process applied to data to be received by means of a timer interrupt.
FIG. 2 is a diagram showing the relationship between a timeout time and a response time.
FIG. 3 is a diagram roughly showing the structure of a mobile phone of a first embodiment.
FIG. 4 is a flowchart of a receiving process executed by hardware.
FIG. 5 is a diagram roughly showing the structure of a device for executing a receiving process equipped in the mobile phone of the first embodiment.
FIG. 6 is a flowchart of a receive interrupt process.
FIG. 7 is a flowchart of a timer interrupt process.
FIG. 8 is a diagram roughly showing the structure of a device for executing a receiving process equipped in a mobile phone of a second embodiment.
FIG. 9 is a diagram showing a specific example of a setting screen through which an inquiry is made to a user whether or not to enable multilink.
FIG. 10 is a flowchart of a setting process for a multilink establishment setting flag in accordance with a request coming from application software.
FIG. 11 is a flowchart of a multilink establishment determination process responding to a request coming from other devices for establishing a communications link.
FIG. 12 is a flowchart of the multilink establishment determination process responding to a request coming from application software for establishing a communications link.
FIG. 13 is a flowchart of a setting process for a multilink establishment setting flag based on a QoS setting.

### BEST MODE FOR CARRYING OUT THE INVENTION

In the below, embodiments of the present invention are described by referring to accompanying drawings.

In the following embodiments, the present invention is embodied in a receiving process program operating on a mobile terminal exemplarily having a radio communications capability.

### (First Embodiment)

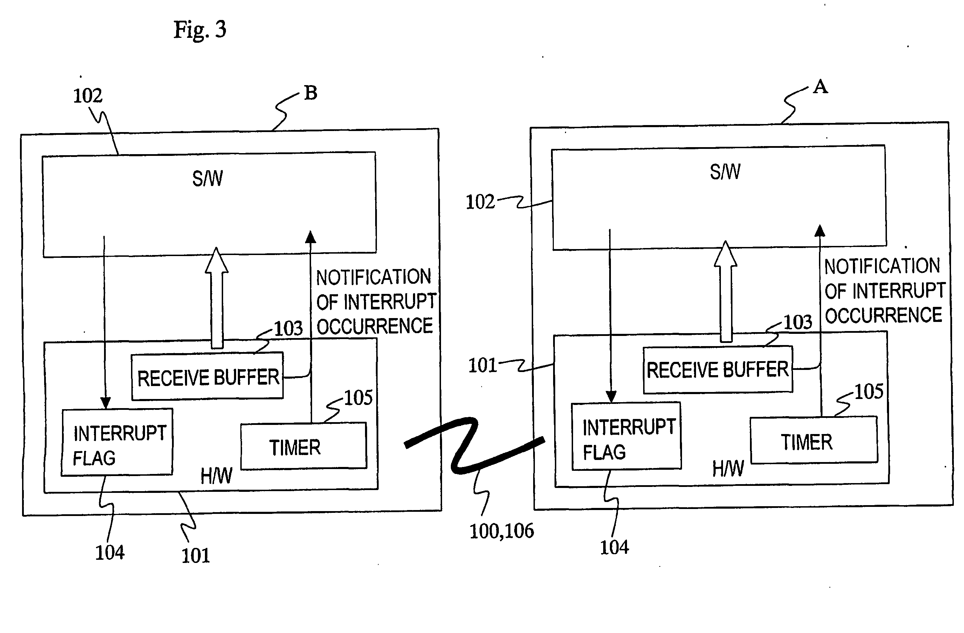

Referring to FIG. 3, a mobile terminal *A* is connected with an other device *B* via a radio path 100. The mobile terminal *A* uses hardware 101 and software 102 to activate its communications capability. The hardware 101 corresponds to lower layers of a protocol stack such as an RF layer, a baseband layer, and the like, in this communications capability. The hardware 101 receives from the other device *B* data including connection requests, acknowledgements, and the like.

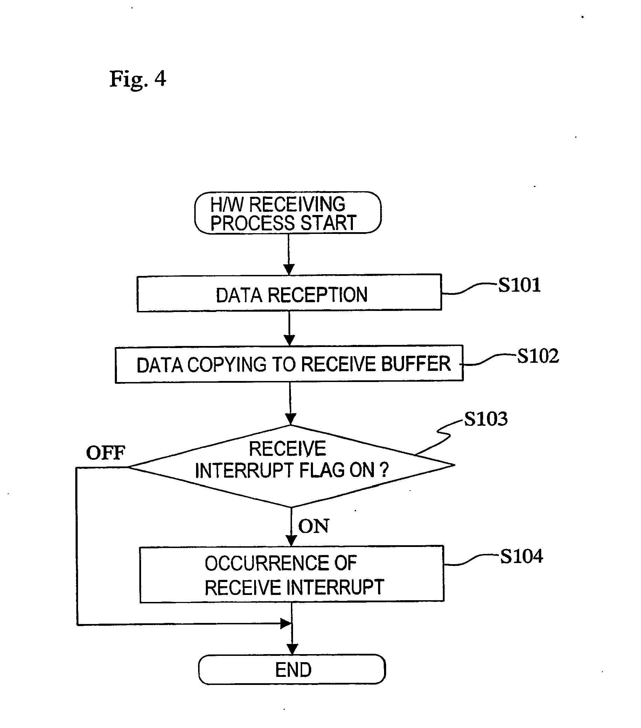

Referring to FIG. 4, upon data reception by the hardware 101 from the other device *B* (S101), the received data is copied into a receive buffer 103 (S102). What resulted by this copying is data storage in the receive buffer 103, and accordingly a request is made for a receive interrupt to occur. In response to thus made request for an occurrence of a receive interrupt, the hardware 101 determines whether a receive interrupt flag 104 is now turned ON or OFF (S103). If the receive interrupt flag 104 is determined as being turned ON, the hardware 101 notifies the software 102 of the occurrence of the receive interrupt (S104). After notifying the software 102 of the occurrence of the receive interrupt, or after determining that the receive interrupt flag 104 is being turned OFF, the hardware 101 ends the data receiving process. That is, with the receive interrupt flag 104 turned OFF, the software 102 receives no occurrence notification of the receive interrupt.

The hardware 101 also causes a timer interrupt to occur at regular intervals according to a timer 105, and every time a timer interrupt occurs, notifies the software 102 thereof.

The software 102 corresponds upper layers of the protocol stack such as a link management layer, a controller interface, an application program interface, and the like. Upon notification from the hardware 101 of an occurrence of a receive interrupt or a timer interrupt, responding thereto, the software 102 fetches into the memory the data stored in the receive buffer 103.

Here, the software 102 includes a receiving process program.

This receiving process program uses the microprocessor, the memory, and the like, of the mobile terminal *A* to operate the mobile phone *A* as a communications device having a device for executing a receiving process.

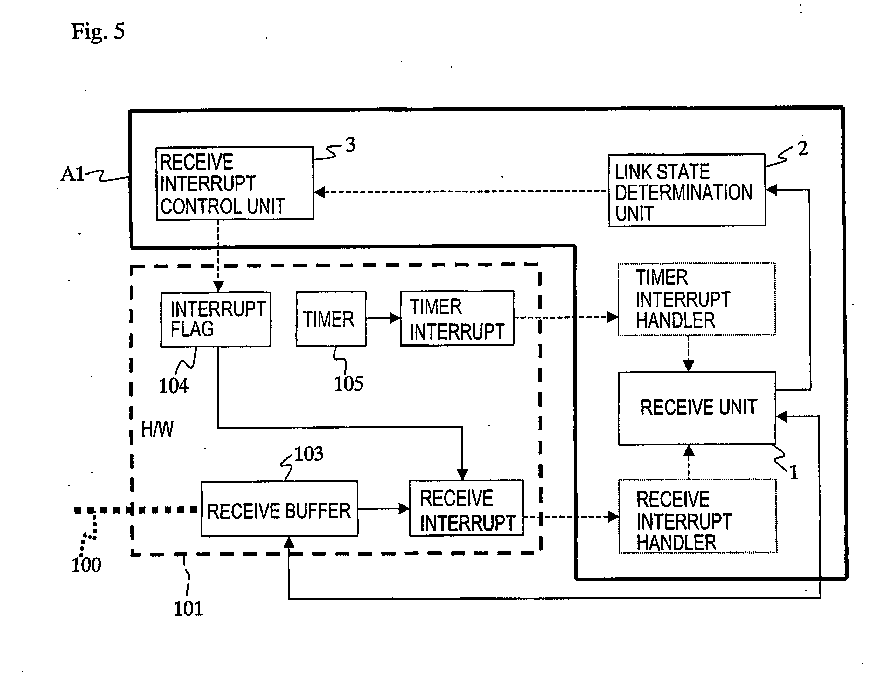

Referring to FIG. 5, the receiving process device *A1* is provided with a receiving unit 1, a link state determination unit 2, and a receive interrupt control unit 3.

When notified by the hardware 101 that a receive interrupt or a timer interrupt has occurred, the receiving unit 1 responsively fetches into the memory the received data stored in the receive buffer 103.

Determined by the link state determination unit 2 is whether or not a (virtual) communications link 106 has been established on the radio path 100 between the mobile terminal *A* and the other device *B*, and if established, whether or not the communications link 106 has been cut off.

Based on the determination result thus derived by the link state determination unit 2, if the communications link 106 has been established, the receive interrupt control unit 3 turns OFF the reception interrupt flag 104 in the hardware 101 for the duration. As described above, through determination whether the receive interrupt flag 104 has been turned ON or OFF, and if the receive interrupt flag 104 is determined as having been turned OFF, the hardware 101 does not notify the software 102 of the occurrence of the receive interrupt. As a result, while the communications link 106 is established, the receiving unit 1 receives no notification about occurrence of the receive interrupt. That is, the receive interrupt is caused to stop occurring.

In the case where the link state determination unit 2 determines as the communications link 106 having been cut off, the receive interrupt flag 104 is turned ON. Responsively, the hardware 101 determines that the receive interrupt flag 104 is now ON, and then notifies the software 102 of the occurrence of the receive interrupt. As a result, if the link state determination unit 2 determines that the communications link 106 has been cut off, the receive interrupt is allowed again to occur.

The device *A1* receives notification about occurrence of the receive interrupt only when the communications link 106 is not established, that is, before the communications link 106 is established (after the communications link 106 is cut off).

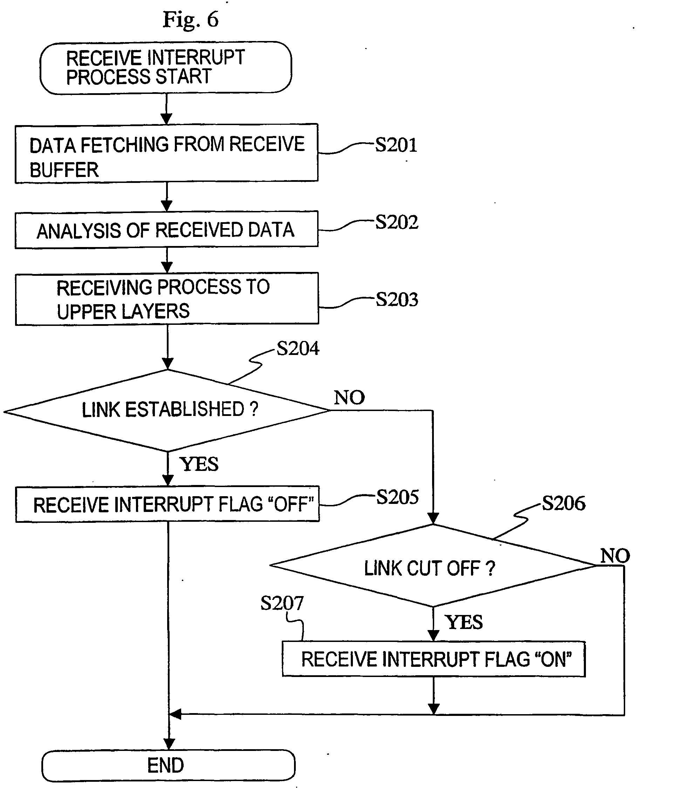

Prior to establishment of the communications link 106, if the device *A1* (or a receive process program) is notified by the hardware 101 that the receive interrupt has occurred, a receive interrupt handler is waked up responding to the notification, and then the receiving process device *A1* starts going through a receive interrupt process. Here, FIG. 6 is a flowchart for demonstrating the receive interrupt process.

As shown in FIG. 6, the receiving unit 1 fetches the data stored in the receive buffer 103 into memory (S201). The data thus fetched into the memory is analyzed by the receiving unit 1 (S202). Thereafter, through the analysis applied to the fetched data, based on the result derived thereby, the receiving unit 1 executes the receiving process with respect to upper layers (S203). Here, even if the fetched data is analyzed as being a connection request, an acknowledgement response is quickly made, leading to smooth establishment of the communications link 106. This is because the receiving process is already done by the receive interrupt.

Next, based on the result derived by the receiving process, the link state determination unit 2 determines whether or not the communications link 106 has been established (S204). If the communications link 106 is determined as having been established, the receive interrupt control unit 3 turns OFF the receive interrupt flag 104 (S205). This is the end of the receive interrupt process.

If the communications link 106 is not determined as having been established, the link state determination unit 2 uses the result derived by the receive interrupt process to determine whether or not the communications link 106 has been cut off (S206). If the communications link 106 is determined as having been cut off, the receive interrupt flag 104 is responsively turned ON (S207). After the receive interrupt flag 104 is turned ON, or if the communications link 106 is determined as not being cut off, this is the end of the receive interrupt process.

As already described in the above, when the communications link 106 is established responding to the reception of the connection request, the receive interrupt flag 104 is turned OFF. Therefore, notified to the receiving process device *A1* after the establishment of the communications link 106 are only occurrences of the timer interrupts.

Upon notification of a timer interrupt by the hardware 101 to the receiving process device *A1*, a timer interrupt handler is responsively waked up, and the device *A1* starts executing a process relating to the timer interrupt.

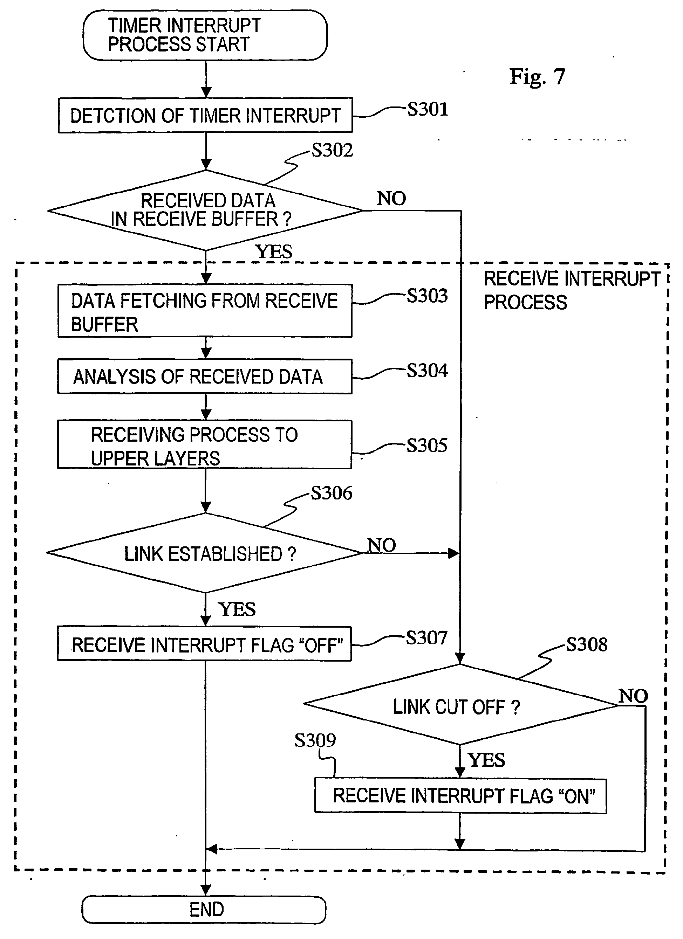

Referring to FIG. 7, when the software 102 detects a timer interrupt (S301), the receiving unit 1 determines whether or not the receive buffer 103 carries data (S302). If the receive buffer 103 is determined as carrying data, executed is a process similar to the receive interrupt process.

That is, the receiving unit 1 performs data fetching from the receive buffer 103 into memory (S303). The data thus fetched into the memory is analyzed by the receiving unit 1 (S304). Through the analysis applied to the fetched data, according to the result, the receiving unit 1 executes a receiving process with respect to the upper layers (S305). In this case, although the receiving process is carried out responding to the timer interrupt, the response is not required to be quick after the communications link 106 is established.

Next, based on the result derived by the receiving process, the link state determination unit 2 determines whether or not the communications link 106 has been established (S306). If the communications link 106 is determined as having been established, the receive interrupt control unit 3 turns OFF the receive interrupt flag 104 (S307), and this is the end of the process.

In both cases that the receive buffer 103 is determined as carrying no data, or the communications link 106 is determined as not being established, the link state determination unit 2 refers to the result derived by the receiving process to determine whether or not the communications link 106 has been cut off (S308). If the communications link 106 is determined as having been cut off, the receive interrupt flag 104 is responsively turned ON (S309). In either case where the receive interrupt flag 104 is turned ON, or the communications link 106 is determined as not being cut off, the process is ended.

After the communications link 106 is established by going through such a receiving process method, the receive interrupt is caused to stop occurring, and in response to an occurrence of a timer interrupt, the data stored in the receive buffer 103 is fetched. In this manner, the dispatching time to be taken associated with interrupt occurrences can be shortened, and a CPU load can be reduced. Further, as described above, responding to the receive interrupt is enabled before the communications link 106 is established.

As is evident therefrom, the mobile terminal *A* is capable of improving the communications efficiency without the help of CPU or hardware throughput, and further, achieving smooth establishment of the communications link with the other device *B*.

It should be noted here that, although the mobile terminal includes a mobile phone and a personal digital assistant to which a communications module meeting the W-CDMA standard or the Bluetooth standard is adopted, the communications device of the present invention is not restricted to such a mobile terminal. The present invention is surely applicable to other types of communications devices, exemplified by communications devices with which wired communications is carried out.

Moreover, the receiving process program is stored in flash memory, or the like, often equipped in the communications device. It is also possible to put it on the market through a telecommunications circuit such as the Internet, or recorded on a computer-readable recording medium such as CD-ROMs.

Prior to establishment of the communications link 106, either a receive interrupt or a timer interrupt occurs. Therefore, even before the communications link 106 is established, data fetching may be performed from the receive buffer 103 responding to a timer interrupt. Here, to ensure a steady quick acknowledgement response, data fetching responding only to a timer interrupt is not enough. Therefore, there needs to respond only to a receive interrupt, or either a timer interrupt or a receive interrupt.

Further, in the receive interrupt process to be executed responding to a receive interrupt, steps S206 and S207 may be skipped, and if determination tells no link establishment, the receive interrupt process may be then ended. Similarly, in the receiving interrupt process responding to a timer interrupt, steps S306 and S307 may be skipped, and step S308 may be carried out after.step S305 of the receiving process is carried out to the upper layers.

### (Second Embodiment)

While a communications link is established, no receive interrupt occurs in the mobile terminal *A* in the first embodiment. Responding to an occurrence of a timer interrupt, the software 102 on the mobile terminal *A* fetches, into memory, data received from the other device *B* and stored in the receive buffer 103. The issue here is that, while the communications link is established, if the receive buffer 103 stores only data communicated only via the link, no quick response is required for the data reception. There may be a case, however, the data to be stored in the receive buffer 103 may include any request for establishing another communications link. In this case, if the software 102 performs fetching, into memory, with respect to even a request for establishing another communications link responding only to an occurrence of a timer interrupt, there may be a possibility for repeated timeouts before thus requested another communications link is established.

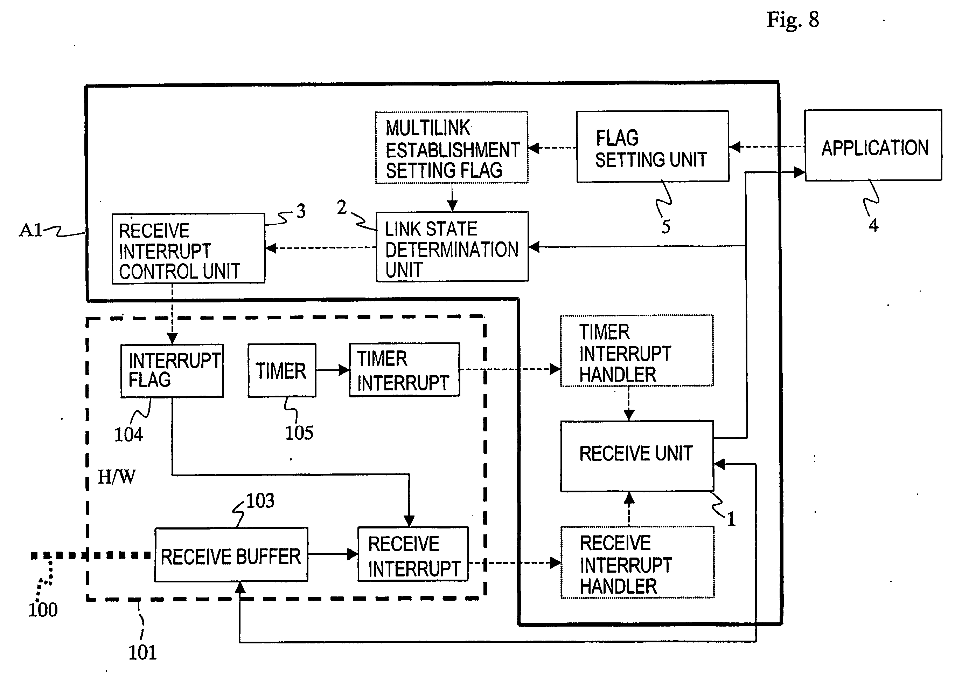

For betterment, referring to FIG. 8, the link state determination unit 2 in the receiving process device therein further determines whether or not to accept a request asking for establishing another communications link while one communications link has been already established.

Such a determination is made based on, for example, a multilink establishment setting flag. Here, the multilink establishment setting flag is used to set whether or not to reject establishment of a plurality of communications links. Assuming that the value thereof is represented in binary, with one value V1, the link state determination unit 2 determines to accept the request, and with the other value V2, the request is rejected through determination.

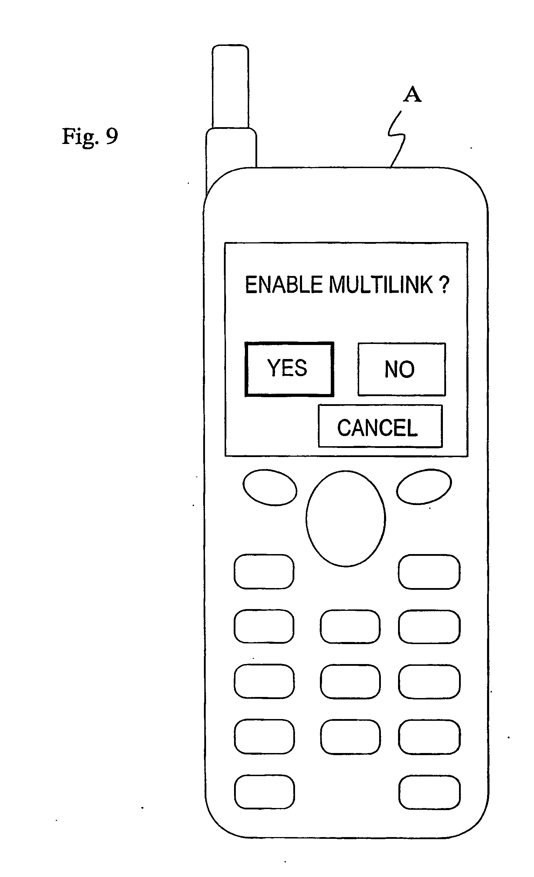

A flag setting unit 5 sets the flag by value in accordance with a request made by application software 4, which operates on the mobile terminal *A*, for example. The application software 4 displays such a setting screen as shown in FIG. 9 on a display so that an inquiry can be made, asking a user whether or not to enable multilink. Through the user selection between "Yes" and "No" on the setting screen, in order to reflect the selection result to a setting, the application software 4 asks for the flag setting unit 5 to make a setting request of the multilink establishment setting flag.

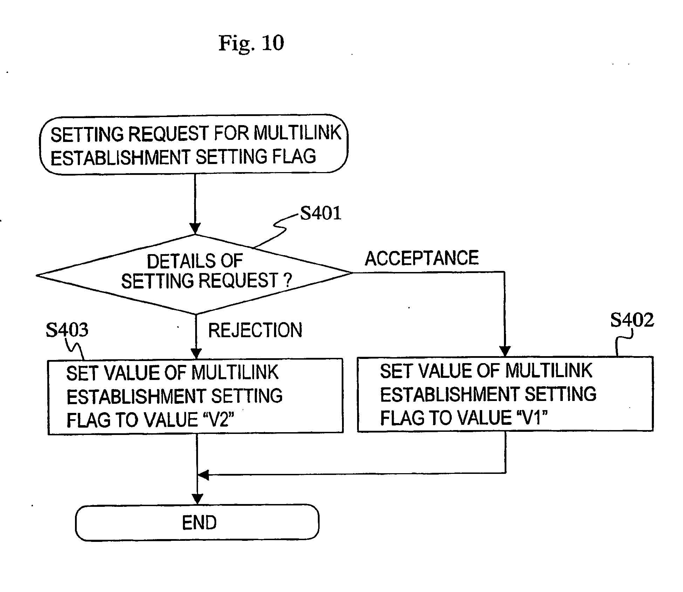

If such a setting request comes from the application software 4 for setting the multilink establishment setting flag, as shown in FIG. 10, the flag setting unit 5 determines whether the request is rejecting multilink establishment or not (S401). If the request is accepting the multilink establishment, the flag setting unit 5 sets the value of the multilink establishment setting flag to the value V1 (S402). If the request is rejecting multilink establishment, on the other hand, the value of the multilink establishment setting flag is set to the value V2 (S403).

As such, after the multilink establishment setting flag is set according to the setting request provided from such local application software 4, the determination for multilink establishment will reflect the user's instruction provided to the application software 4, the specifications of the application software 4, and the like.

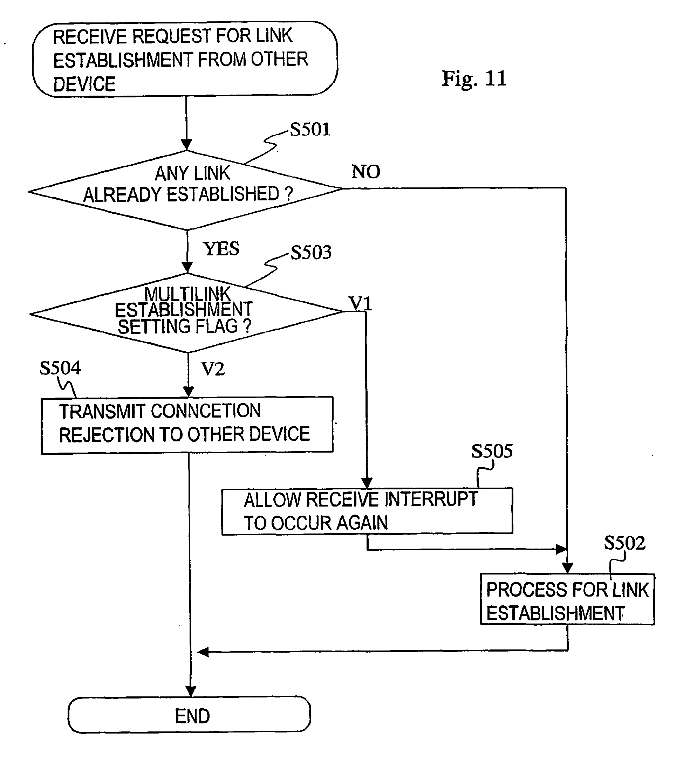

FIG. 11 is a flowchart for demonstrating a process to determine multilink establishment in a case where a request comes from the other device for establishing a communications link.

In the mobile terminal *A*, when the receiving unit 1 analyzes that the data fetched from the receive buffer 103 into the memory is a request for establishing a communications link, the link state determination unit 2 determines whether or not any communications link has been already established (S501).

If determination tells that no communications link is established, as already described in the first embodiment, executed is a process for establishing a communications link (S502). If determination tells that a communications link is established, on the other hand, the link state determination unit 2 refers to the multilink establishment setting flag for its value to determine whether to accept the request or not (S503).

If the link state determination unit 2 determines to reject the request, a response of connection rejection is given back to the source from where the request was provided (S504).

If the link state determination unit 2 determines to accept the request, the receive interrupt control unit 3 allows a receive interrupt to occur again (S505). Once the receive interrupt is allowed to occur again, after the communications link is established, as described in the first embodiment, the receive interrupt is caused again to stop occurring in response to the receive interrupt flag 104 turned OFF by the receive interrupt control unit 3.

As such, even if a request for establishing another communications link while one communications link has been already established, temporarily allowing the receive interrupt to occur will smoothly establish another communications link.

Here, described in the present embodiment is a case where the mobile terminal *A* receives a request from the other device *B* for establishing a communications link therewith. This is not restrictive, and when the application software operating on the mobile terminal *A* asks for any software lower than itself in the protocol stack to establish another communications link with the other device, a determination may be made whether or not to accept the request.

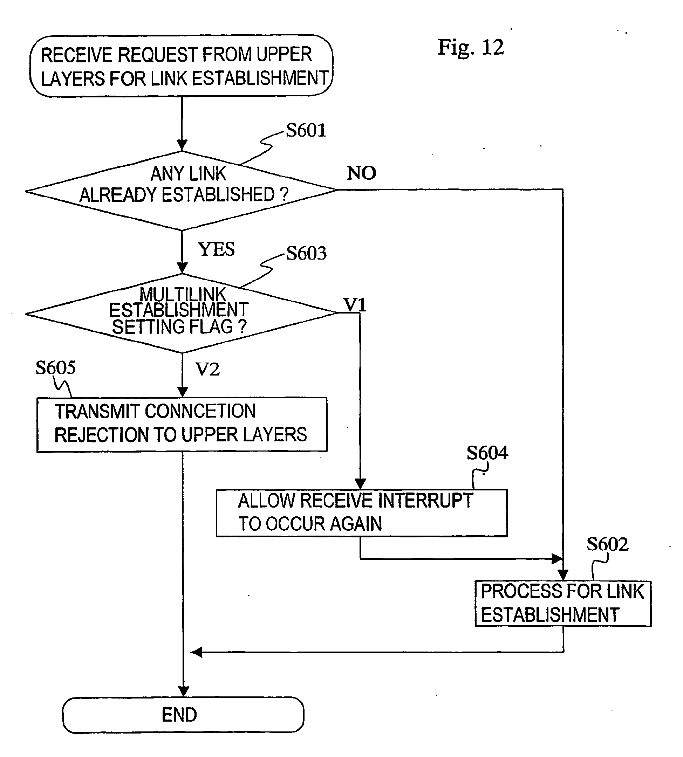

Upon reception from the application software of a request for establishing a communications link, similarly to an establishment request from the other device *B*, as shown in FIG. 12, the link state determination unit 2 determines whether or not the communications link has been already established (S601).

If no communications link is determined as having been already established, as described in the first embodiment, a process is executed to establish a communications link (5602). If the communications link is determined as having been already established, on the other hand, the link state determination unit 2 refers to the multilink establishment setting flag for its value to determine whether or not to accept the request (S603).

When the link state determination unit 2 determines to accept the request, similarly to the establishment request coming from the other device *B*, the receive interrupt control unit 3 allows the receive interrupt to occur again (S604).

When the link state determination unit 2 determines to reject the request, a response of connection rejection is given to the application (S605).

Instead of referring to the request provided from the application software to set the multilink establishment setting flag, referring to information managed by any software locating lower than the application software in the protocol stack is a possibility.

As an example, Bluetooth software includes software on the side of an application as host, and software on the side of a host controller controlled by the application. The host can make the QoS (Quality of Service) setting about communications with the hosts of other Bluetooth devices.

The QoS setting is made via an asynchronous connectionless link, which is established between the host of a certain Bluetooth device and the host of another Bluetooth device. The host making the QoS setting transmits a QoS setup command to link management software, which is included in a local host controller via the link. This setup command includes information about a service type, a peak bandwidth, for example. The service type includes a best-effort type and a guaranteed type. Upon reception of the QoS setup command, the link management software returns a command status event to the host, and then transmits a request to the link management software included in the host controller of the other Bluetooth device. With a response to accept the request, the link management software notifies a QoS setup completion event to the host locating upper thereto through the link. Further, the link management software having received the request-accepting response also notifies the QoS setup completion event to the host locating upper thereto through the link.

In the Bluetooth device, the QoS setting is made as such, and accordingly, the link management software locating lower than the application software can acquire the service type.

Alternatively, operating any software corresponding to the link management software on the CPU realizes the flag setting unit 5, and the resulting flag setting unit 5 may set the flag by value based on the service type.

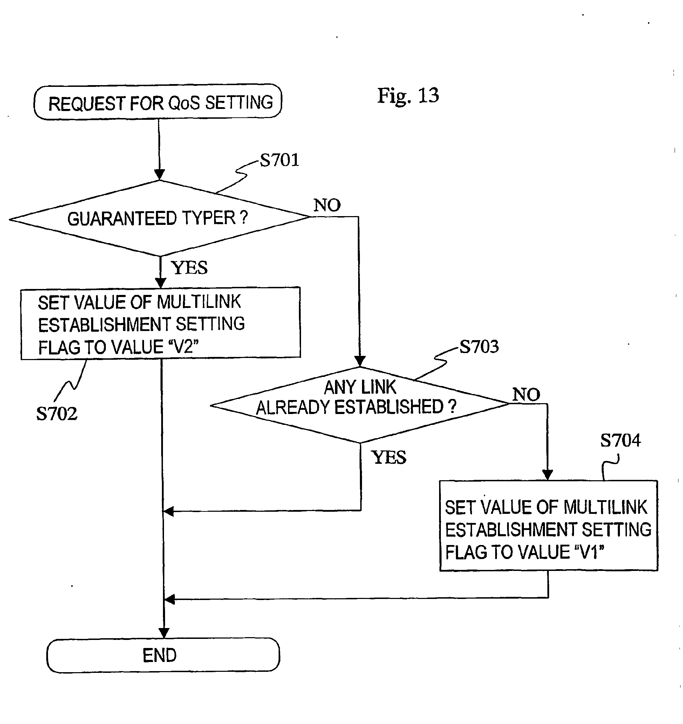

If this is the case, when received the QoS setup command from the host, as shown in FIG. 13, the flag setting unit 5 determines whether the service type information included in the command is indicating the guaranteed type or not (S701).

If the service type information is determined as indicating the guaranteed type, the flag setting unit 5 sets the value of the multilink establishment setting flag to the value V2 (S702). If the service type information is determined as not indicating the guaranteed type, the link state determination unit 2 determines whether a communications link has been already established (S703). Without a communications link being already established, the flag setting unit 5 sets the value of the multilink establishment setting flag to the value V1 (S704).

As such, when the QoS setting is reflected to the value of the multilink establishment setting flag, even if a request comes for establishing another communications link while a communications link has been already established, the request is rejected if the already-established communications link shows a guaranteed type for its QoS type.

As is evident from the above, in the present invention, the dispatching time to be taken associated with interrupt occurrences can be shortened, and a CPU load can be reduced. This is because no receive interrupt occurs while a communications link is established. Consequently, the communications efficiency can be successfully improved without depending on CPU or hardware throughput. What is better, an occurrence of a receive interrupt can be used as a cue to establish a communications link, which is smoothly established with other devices.

Moreover, if there is a request asking for establishing another communications link while one communications link has been already established, the request is checked to see whether to accept or reject. If the request is accepted, allowing the request interrupt to occur again will lead to smooth establishment of multilink.

## Claims

1. A communications device for fetching, in response to an occurrence of a receive interrupt or a timer interrupt, data received from an other device and stored in a receive buffer, the communications device comprising:
a link state determination unit (2) operable to determine whether a communications link with the other device is established; and
a receive interrupt control unit (3) operable to cause, based on a determination result derived by the link state determination unit, the receive interrupt to stop occurring while the communications link is established, **characterised in that**
the link state determination unit (2) is adapted to determine whether the communications link is cut off, and
the receive interrupt control unit (3) is adapted to allow, when the link state determination unit determines that the communications link is cut off, the-receive interrupt to occur again.

2. A communications device for fetching, in response to an occurrence of a receive interrupt or a timer interrupt, data received from an other device and stored in a receive buffer, the communications device comprising:
a link state determination unit (2) operable to determine whether a communications link with the other device is established; and
a receive interrupt control unit (3) operable to cause, based on a determination result derived by the link state determination unit, the receive interrupt to stop occurring while the communications link is established, **characterised in that**
the link state determination unit (2) is adapted to determined if there comes a request to establish an other communications link while the communications link is being established, whether to accept or reject the request, and wherein the receive interrupt control unit (3) is adapted to allow the receive interrupt to occur again when the link state determination unit determines to accept the request.

3. The communications device according to claim 2, wherein the link state determination unit (2) determines whether to accept or reject the request based on a QoS (Quality of Service) setting.

4. The communications device according to claim 2, wherein the link state determination unit (2) determines whether to accept or reject the request based on an application instruction.

5. The communications device according to claim 2, wherein the request for establishing the other communications link is the one made with respect to the device itself or the other device.

6. A receiving process method for fetching, in response to an occurrence of a receive interrupt or a timer interrupt, data received from an other device and stored in a receive buffer, the method comprising the steps of:
determining whether a communications link with the other device is established; and
causing, based on a result derived by the determination, the receive interrupt to stop occurring while the communications link is established;
determining whether the communications link has been cut off; and
allowing, when it has been determined that the communications link has been cut off, the receive interrupt to occur again.

7. A receiving process program for fetching, in response to an occurrence of a receive interrupt or a timer interrupt, data received from an other device and stored in a receive buffer, the program comprising the steps of, for computer execution:
determining whether a communications link with the other device is established; and
causing, based on a result derived by the determination, the receive interrupt to stop occurring while the communications link is established;
determining whether the communications link has been cut off; and
allowing, when it has been determined that the communications link has been cut off, the receive interrupt to occur again

8. A computer-readable recording medium, having recorded thereon the receiving process program according to claim 7.

## Patentansprüche

1. Kommunikationsvorrichtung zum Holen als Reaktion auf ein Auftreten einer Empfangsunterbrechung oder einer Zeitgeberunterbrechung von einer anderen Vorrichtung empfangenen und in einem Empfangspuffer gespeicherten Daten, mit folgendem:
einer Streckenzustandsbestimmungseinheit (2) zum Bestimmen, ob eine Kommunikationsstrecke mit der anderen Vorrichtung hergestellt ist; und
einer Empfangsunterbrechungssteuereinheit (3) zum Bewirken, auf Grundlage eines durch die Streckenzustandsbestimmungseinheit abgeleiteten Bestimmungsergebnisses, dass die Empfangsunterbrechung aufhört aufzutreten, während die Kommunikationsstrecke hergestellt wird, **dadurch gekennzeichnet, dass** die Streckenzustandsbestimmungseinheit (2) bestimmen kann, ob die Kommunikationsstrecke abgeschnitten ist, und
die Empfangsunterbrechungseinheit (3) zulassen kann, wenn die Streckenzustandsbestimmungseinheit bestimmt, dass die Kommunikationsstrecke abgeschnitten ist, dass die Empfangsunterbrechung wieder auftritt.

2. Kommunikationsvorrichtung zum Holen als Reaktion auf ein Auftreten einer Empfangsunterbrechung oder einer Zeitgeberunterbrechung von einer anderen Vorrichtung empfangenen und in einem Empfangspuffer gespeicherten Daten, mit folgendem:
einer Streckenzustandsbestimmungseinheit (2) zum Bestimmen, ob eine Kommunikationsstrecke mit der anderen Vorrichtung hergestellt ist; und
einer Empfangsunterbrechungssteuereinheit (3) zum Bewirken, auf Grundlage eines durch die Streckenzustandsbestimmungseinheit abgeleiteten Bestimmungsergebnisses, dass die Empfangsunterbrechung aufhört aufzutreten, während die Kommunikationsstrecke hergestellt wird, **dadurch gekennzeichnet, dass** die Streckenzustandsbestimmungseinheit (2) bestimmen kann, wenn eine Anforderung zur Herstellung einer anderen Kommunikationsstrecke vorkommt, während die Kommunikationsstrecke hergestellt wird, ob die Anforderung anzunehmen oder abzuweisen ist, und wobei die Empfangsunterbrechungssteuerungseinheit (3) zulassen kann, dass die Empfangsunterbrechung wieder auftritt, wenn die Streckenzustandsbestimmungseinheit bestimmt, die Anforderung anzunehmen.

3. Kommunikationsvorrichtung nach Anspruch 2, wobei die Streckenzustandsbestimmungseinheit (2) bestimmt, ob die Anforderung anzunehmen oder abzuweisen ist, auf Grundlage einer QoS-(Quality of Service)-Einstellung.

4. Kommunikationsvorrichtung nach Anspruch 2, wobei die Streckenzustandsbestimmungseinheit (2) bestimmt, ob die Anforderung anzunehmen oder abzuweisen ist, auf Grundlage einer Anwendungsanweisung.

5. Kommunikationsvorrichtung nach Anspruch 2, wobei die Anforderung zum Herstellen der anderen Kommunikationsstrecke die ist, die hinsichtlich der Vorrichtung selbst oder der anderen Vorrichtung getroffen wird.

6. Empfangsvorgangsverfahren zum Holen als Reaktion auf ein Auftreten einer Empfangsunterbrechung oder einer Zeitgeberunterbrechung von einer anderen Vorrichtung empfangenen und in einem Empfangspuffer gespeicherten Daten, mit folgenden Schritten:
Bestimmen, ob eine Kommunikationsstrecke mit der anderen Vorrichtung hergestellt ist; und
Bewirken, auf Grundlage eines durch die Bestimmung abgeleiteten Ergebnisses, dass die Empfangsunterbrechung aufhört aufzutreten, während die Kommunikationsstrecke hergestellt wird;
Bestimmen, ob die Kommunikationsstrecke abgeschnitten worden ist; und
Zulassen, wenn bestimmt worden ist, dass die Kommunikationsstrecke abgeschnitten worden ist, dass die Empfangsunterbrechung wieder auftritt.

7. Empfangsvorgangsprogramm zum Holen, als Reaktion auf ein Auftreten einer Empfangsunterbrechung oder einer Zeitgeberunterbrechung, von einer anderen Vorrichtung empfangenen und in einem Empfangspuffer gespeicherten Daten, wobei das Programm die folgenden Schritte zur Computerausführung umfasst:
Bestimmen, ob eine Kommunikationsstrecke mit der anderen Vorrichtung hergestellt ist; und
Bewirken, auf Grundlage eines durch die Bestimmung abgeleiteten Ergebnisses, dass die Empfangsunterbrechung aufhört aufzutreten, während die Kommunikationsstrecke hergestellt wird;
Bestimmen, ob die Kommunikationsstrecke abgeschnitten worden ist; und
Zulassen, wenn bestimmt worden ist, dass die Kommunikationsstrecke abgeschnitten worden ist, dass die Empfangsunterbrechung wieder auftritt.

8. Computerlesbares Aufzeichnungsmedium, auf dem das Empfangsvorgangsprogramm nach Anspruch 7 aufgezeichnet ist.

## Revendications

1. Dispositif de communications pour rechercher, en réponse à une occurrence d'une interruption de réception ou d'une interruption de temporisateur, des données reçues depuis un autre dispositif et enregistrées dans une mémoire tampon de réception, le dispositif de communications comprenant :
une unité de détermination d'état de liaison (2) apte à fonctionner pour déterminer si une liaison de communications avec l'autre dispositif est établie ; et
une unité de commande d'interruption de réception (3) apte à fonctionner pour provoquer, sur la base d'un résultat de la détermination obtenu par l'unité de détermination d'état de liaison, l'arrêt de l'occurrence de l'interruption de réception alors que la liaison de communications est établie,
**caractérisé en ce que**
l'unité de détermination d'état de liaison (2) est adaptée pour déterminer si la liaison de communications est coupée, et
l'unité de commande d'interruption de réception (3) est adaptée pour permettre, lorsque l'unité de détermination d'état de liaison détermine que la liaison de télécommunication est coupée, à l'interruption de réception de se produire à nouveau.

2. Dispositif de communications pour rechercher, en réponse à une occurrence d'une interruption de réception ou d'une interruption de temporisateur, des données reçues depuis un autre dispositif et enregistrées dans une mémoire tampon de réception, le dispositif de communications comprenant :
une unité de détermination d'état de liaison (2) apte à fonctionner pour déterminer si une liaison de communications avec l'autre dispositif est établie ; et
une unité de commande d'interruption de réception (3) apte à fonctionner pour provoquer, sur la base d'un résultat de la détermination obtenu par l'unité de détermination d'état de liaison, l'arrêt de l'occurrence de l'interruption de réception alors que la liaison de communications est établie,
**caractérisé en ce que**
l'unité de détermination d'état de liaison (2) est adaptée pour déterminer s'il arrive une demande d'établissement d'une autre liaison de communications alors que la liaison de communications est établie, s'il convient d'accepter ou de rejeter la demande, et l'unité de commande d'interruption de réception (3) étant adaptée pour permettre à l'interruption de réception de se produire à nouveau quant l'unité de détermination d'état de liaison détermine qu'il convient d'accepter la demande.

3. Dispositif de communications selon la revendication 2, dans lequel l'unité de détermination d'état de liaison (2) détermine s'il convient d'accepter ou de rejeter la demande sur la base d'un réglage QoS (qualité de service).

4. Dispositif de communications selon la revendication 2, dans lequel l'unité de détermination d'état de liaison (2) détermine s'il convient d'accepter ou de rejeter la demande sur la base d'une instruction d'application.

5. Dispositif de communications selon la revendication 2, dans lequel la demande d'établissement de l'autre liaison de communications est une demande effectuée par rapport au dispositif lui-même ou par rapport à l'autre dispositif.

6. Procédé de traitement de réception pour rechercher, en réponse à une occurrence d'une interruption de réception ou d'une interruption de temporisateur, des données reçues depuis un autre dispositif et enregistrées dans une mémoire tampon de réception, le procédé comprenant les étapes consistant à :
déterminer si une liaison de communications avec l'autre dispositif est établie ; et
provoquer, sur la base d'un résultat obtenu par la détermination, l'arrêt de l'occurrence de l'interruption de réception alors que la liaison de communications est établie ;
déterminer si la liaison de communications a été coupée ; et
permettre, lorsqu'il a été déterminé que la liaison de communications a été coupée, à l'interruption de réception de se produire à nouveau.

7. Programme de traitement de réception pour rechercher, en réponse à une occurrence d'une interruption de réception ou d'une interruption de temporisateur, des données reçues depuis un autre dispositif et enregistrées dans une mémoire tampon de réception, le procédé comprenant les étapes, devant être exécutées sur un ordinateur, consistant à :
déterminer si une liaison de communications avec l'autre dispositif est établie ; et
provoquer, sur la base d'un résultat obtenu par la détermination, l'arrêt de l'occurrence de l'interruption de réception alors que la liaison de communications est établie ;
déterminer si la liaison de communications a été coupée ; et
permettre, lorsqu'il a été déterminé que la liaison de communications a été coupée, à l'interruption de réception de se produire à nouveau.

8. Support d'enregistrement lisible par ordinateur, sur lequel le programme de traitement de réception selon la revendication 7 est enregistré.
